# EUROPEAN PATENT APPLICATION

(11) **EP 3 960 257 A1**
(43) Date of publication of application: **02.03.2022**
(21) Application number: 20793946.3
(22) Date of filing: 26.03.2020
(51) Int. Cl.: A63B 71/06, G06N 3/02

(54) **DATA PROCESSING DEVICE, DATA PROCESSING METHOD, AND PROGRAM**

(30) Priority: 23.04.2019 JP 2019082222
(71) Applicant: Preferred Networks, Inc., Tokyo 100-0004 (JP)
(72) Inventor: SUZUO Daichi, Tokyo 100-0004 (JP); VALLET Alexis, Tokyo 100-0004 (JP)
(74) Representative: Noble, Nicholas
(86) International application number: PCT/JP2020/013753
(87) International publication number: WO 2020/217844

(57) **Abstract**

There is provided a device or a method which generates data indicating a feature of an aspect in which an object is involved at least based on a position of the object at a certain time point and estimates an aspect based on the data. A data processing device being one embodiment of the present invention includes an aspect data generator and an estimator. The aspect data generator generates aspect data based on first vectors. The first vectors are generated based on positional data indicating positions of a plurality of objects and feature data indicating respective features of the plurality of objects. The estimator performs estimation about an aspect based on the aspect data.

## Description

### FIELD

The embodiment relates to a data processing device, a data processing method, and a non-transitory computer readable medium.

### BACKGROUND

With the development of the information processing technique, the positions and movements of a plurality of objects can be highly accurately grasped. For example, the movement loci and the running distances of players in a sport game are calculated by positioning by a navigation satellite or analyzing images from a plurality of cameras. These kinds of information are used for analyzing the features and performances of the players.

On the other hand, the position of an object exerts an enormous influence on a situation, namely, an aspect in which the object is involved. In sports in which each player freely moves such as soccer and rugby, the position itself of the player exerts an influence on a game situation. For example, depending on the distance between even a player (irrespective of ally or enemy) not directly involved with a ball and a player (ball holder) holding a ball, the play of the ball holder changes. As explained above, the position of the object closely relates to the aspect.

However, in the present circumstances, an analytical method and evaluation criteria relating to the position of the object are not established yet. Therefore, even though the position of each object can be grasped in detail, there are many aspects in which the feature of the aspect cannot be grasped based on the position of each object and analysis and evaluation are difficult to perform. For example, in the present situation, the importance of the aspect is determined while focusing on a specific event (for example, a shoot), but it is difficult to understand the importance of an aspect such as moving the ball around midfield. Therefore, there is a possibility that the aspect which must be originally important is overlooked. Accordingly, a technique of grasping the feature of the aspect based on the position of the object is required.

### DISCLOSURE OF INVENTION

There is provided a device or a method which generates data indicating a feature of an aspect in which an object is involved at least based on a position of the object at a certain time point and estimates an aspect based on the data.

### MEANS FOR SOLVING PROBLEM

A data processing device being one embodiment of the present invention includes an aspect data generator and an estimator. The aspect data generator generates aspect data based on first vectors. The first vectors are generated based on positional data indicating positions of a plurality of objects and feature data indicating respective features of the plurality of objects. The estimator performs estimation about an aspect based on the aspect data.

### BRIEF DESCRIPTION OF THE DRAWINGS

Fig. 1 is a block diagram illustrating an aspect estimation system according to a first embodiment;
Fig. 2 is a schematic flowchart of the whole processing of the aspect estimation system according to the first embodiment;
Fig. 3 is a block diagram illustrating an aspect estimation system according to a second embodiment;
Fig. 4 is a schematic flowchart of learning processing; and
Fig. 5 is a block diagram illustrating an example of a hardware configuration in one embodiment of the present invention.

### DETAILED DESCRIPTION

Hereinafter, embodiments of the present invention will be explained referring to the drawings.

### (First Embodiment)

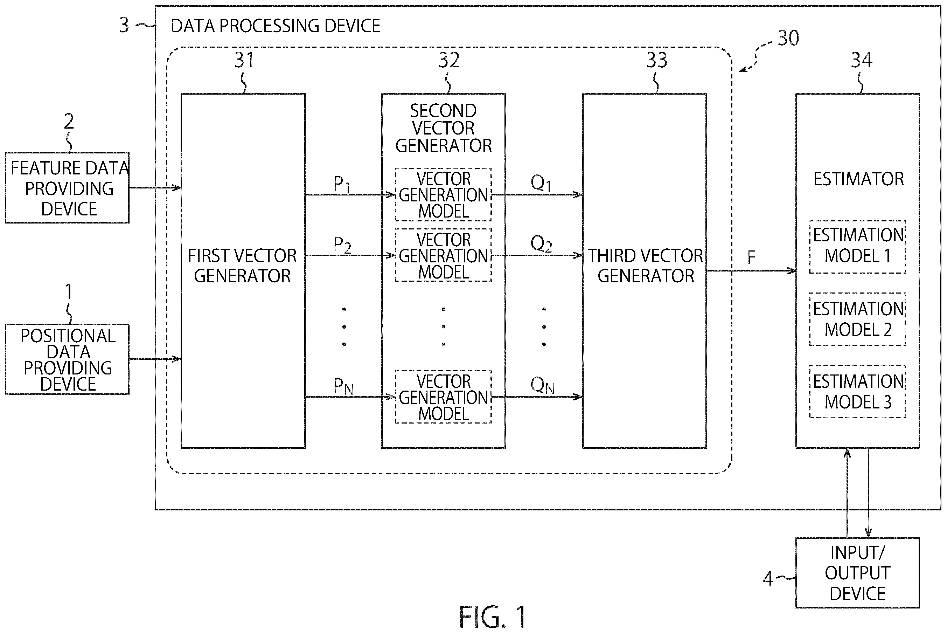

Fig. 1 is a block diagram illustrating an aspect estimation system according to a first embodiment. The aspect estimation system in Fig. 1 includes a positional data providing device 1, a feature data providing device 2, a data processing device 3, and an input/output device 4. The data processing device 3 illustrated in Fig. 1 includes a first vector generator 31, a second vector generator 32, a third vector generator 33, and an estimator 34.

The aspect estimation system according to one embodiment of the present invention estimates an aspect from data about a position of an object such as a player in a sport. The object is assumed to be determined in advance, but the object may be specified based on the condition that the object exists within a specific region. Further, a set of observation values of positions of objects at a certain time point (moment) is defined as a "scene" and some meaning which can be interpreted from the scene is defined as "aspect" here.

Specifically, the aspect estimation system generates aspect data latently indicating the feature of an aspect based on positional data indicating positions of a plurality of objects and feature data indicating respective features of the plurality of objects. The positional data and the feature data correspond to the set of the observation values. For example, when the objects are players in a sport, the generated aspect data latently indicates the feature of the aspect of the sport at the time point relating to the positions. For example, in the case where a team α and a team β are playing a game of soccer, when a plurality of players in the team α positioned in a rear part of the own ground of the team α are displaced in position in a goal direction, a player of the team β is hardly called offside, which can be said to be a situation advantageous to an attack for the team β. As explained above, the position and the feature of each player in a game are closely related to the aspect of the game. Therefore, the aspect data can be generated from the positional data and the feature data using a neural network.

An aspect classification system then performs processing using the generated aspect data. Here, it is assumed that estimation about an aspect is performed using the generated aspect data. In the estimation about the aspect of a sport, for example, the estimation of whether a goal is going to be made, whether one of teams is in the lead or the teams are evenly matched, and whether specific tactics are being carried out, is performed. A user using the aspect estimation system can recognize in what aspect the game is, from the estimation result. Alternatively, the user may compare two pieces of aspect data to estimate whether two aspects are similar or not.

Note that the generation of the aspect data and the processing using the aspect data are assumed to be performed in the data processing device 3 in the example of Fig. 1, but may be performed in different devices. More specifically, the data processing device 3 may be separated into a device which performs the generation of the aspect data and a device which performs the processing using the aspect data. As explained above, the data processing device 3 may be segmented into a plurality of devices each taking charge of one or more kinds of processing. Besides, the components of the data processing device 3 may be segmented or may be integrated. For example, the first vector generator 31, the second vector generator 32, and the third vector generator 33 may be collectively expressed as an aspect data generator 30.

Besides, it is assumed that each of the devices in the aspect estimation system can transmit and receive data over a communication network or the like. Further, components which manage input and output of each of the devices (namely, an input unit and an output unit) and a component which stores data necessary for processing (namely, a storage unit) are not illustrated and their explanation is omitted.

Note that the explanation will be made using an example of estimating the aspect of soccer here, but an aspect of a sport other than soccer may be estimated or an aspect having no relation with sport may be estimated. For example, it is also possible to regard a visitor to a facility such as a theme park as an object, generate aspect data based on the position of the visitor, and estimate whether it is in a dangerous situation requiring the control over a crowd such as traffic control and traffic regulation or the control over the facility such as restrictions on entry to an attraction in the facility. Note that not the whole facility but its partial region may be taken into consideration. As explained above, the aspect in a specific region may be estimated while regarding a material body existing within the specific region as an object.

Alternatively, it is also conceivable to regard an aspect in a virtual world such as a computer game as the object for estimation. It is also assumed to estimate an aspect of not only a sport game played on a computer but also a game played at the same time by many players such as an MMORPG (Massively Multiplayer Online Pole-Playing Game). For example, it is also conceivable to estimate an aspect of a war game or the like in which players are divided into a plurality of teams to fight over positions. As explained above, the object is not limited to human beings, but may be a machine such as a robot, a vehicle, or an aircraft, or data on a player character or the like in the virtual world.

Note that the terms used in this explanation should be replaced according to an estimated aspect. For example, in the case of estimating the aspect of ice hockey, the term of pitch in soccer should be replaced with rink.

Each of the devices will be explained. The positional data providing device 1 provides the positional data to the data processing device 3. Note that it is assumed that coordinate is indicated as the positional data. Examples of a method of measuring the coordinate include positioning by a navigation satellite and the like. A tracking system for tracking the position of a player is in practical use, so that the data processing device 3 may only need to acquire the positional data from the tracking system.

It is also conceivable to include more detailed information in the positional data in the case where the play of a player can be highly recognized. For example, it is conceivable to estimate a moving situation (running, walking, standing or the like), a moving direction and so on of the player, for example, from the transition of the movement position and include the moving situation in the positional data. Besides, if it is possible to recognize the orientation and the posture of the player, they may be included in the positional data. It is conceivable that by further using data such as a moving situation, the aspect indicated by the aspect data becomes more essential. Note that the detailed information may be provided from the positional data providing device 1 or may be calculated by the data processing device 3 based on time-series positional data. Besides, the detailed information may be contained not in the positional data but in the feature data.

The feature data providing device 2 provides the feature data to the data processing device 3. The feature data preferably contain data indicating at least a team to which the player belongs. For example, it is preferable that when the team α and the team β are playing a game, the information indicating that a player A belongs to the team α is contained in the feature data. Note that the data indicating the team to which a player belongs is not the name of the team to which the player belongs but may be a logical value. For example, it is conceivable that the team to which the players A and B belong is expressed by "0", and the team to which a player C belongs is expressed by "1". In this case, to which of the team α and the team β the player A belongs is unknown, but it can be determined that the player B is an ally of the player A and the player C is an enemy of the player A. As explained above, the team to which the player belongs may be the one by which the enemy or ally of each player can be discriminated.

Further, it is conceivable that various kinds of information other than the team to which the player belongs are contained in the feature data. The feature data may contain physical features of the player such as the height, the weight, and the dominant foot (which of right and left feet is mainly used). Further, the feature data may contain features indicating the performance of the player such as the sprint official time and the score in the current season. Further, the feature data may contain a feature indicating the playing style of the player such that the player often passes the ball, often shoots a goal, and tends to avoid heading. Further, the feature data may contain information about the current game such as the attack direction, the presence or absence of a warning, the presence or absence of leaving, the score in the current game, the number of assists in the current game, the moving distance in the current game, the degree of fatigue of the player, and the presence or absence of injury. The feature data may additionally contain information such as the registered position, the annual salary, the number of days from the most recent game and so on. Note that these kinds of information may be expressed by numerical values or may be expressed by logical values corresponding to classified items such as a category A, a category B, and a category C.

It is conceivable that even if the position of the player is the same, the aspect differs when the feature of the player is different. For example, in soccer, the importance of the aspect significantly differs depending on whether the player existing in front of the goal is tall. Accordingly, the aspect data can indicate the feature of the aspect by using the above features.

Further, the feature data may contain not only the feature of the player himself/herself but also information related to the player. The feature data may contain, for example, the features of the team to which the player belongs such as the league to which the team belongs and the formation of the team (estimation of the player layout). Further, the feature data may contain information related to the game environment such as the weather (also including temperature, humidity, wind direction, wind power and so on), the pitch condition (grass, clay or the like), whether the game venue is home, the name of the game venue and so on. The feature data may contain various kinds of information as explained above.

The first vector generator 31 of the data processing device 3 takes out information on predetermined items from the feature data and the positional data, and generates corresponding data for each player. The items to be taken out are common to the players. The generated data is expressed by a vector having a plurality of elements, and therefore described as a first vector. Further, the first vector for an i-th (i is an integer of 1 or more) player is expressed by Pᵢ. Further, a j-th (j is an integer of 1 or more) element included in the first vector Pᵢ is expressed by pᵢⱼ. In the case where the first vector includes K (K is an integer of j or more) elements, the first vector is a K-dimensional vector, and the first vector Pᵢ is expressed as a vector Pᵢ = {pᵢ₁, pᵢ₂, ....., p_{iK}}. The first vector is generated for each player, so that the number of the first vectors coincides with the number of all of the players. For example, in the case of estimating the aspect of soccer, 1st to 22nd first vectors are generated. The number of all of the players playing a sport is expressed by an integer N (N is an integer of 1 or more). Here, reserve players not playing are not included in the integer N. Note that when there are deficits in some of the items to be taken out, they may be complemented by setting appropriate values.

It is assumed that, for example, it is determined in advance to take out the "longitudinal position coordinate of a player", "lateral position coordinate of a player", "current moving direction vector", "height of a player", "dominant foot of a player", "whether the game venue is the home of the player", "weather at the game venue", and "temperature at the game venue" as the elements of the first vector. In this case, the first vector generator 31 determines that the longitudinal position coordinate of the first player is X₁, and the lateral position coordinate of the first player is Y₁ from the positional data. The first vector generator 31 further determines a current moving direction vector V₁ from the past positional data. The first vector generator 31 further determines, from the feature data, that the height of the first player is 180 cm, the dominant foot of the first player is the left foot, the game venue is the home of the first player, the weather at the game venue is cloudy, and the temperature at the game venue is 16°C. Then, the first vector generator 31 generates the first vector P₁ of the first player as P₁ = {X₁, Y₁, V₁, 180, 1, 0, 2, 16}. The elements which cannot be expressed by numerical values, such as the team to which the player belongs, the dominant foot, and the weather are expressed as logical values. In this case, the fact that the dominant foot is the left foot is expressed by "1" in the fifth element, the fact that the game venue is the home is expressed by "0" in the sixth element, and the fact that the weather at the game venue is cloudy is expressed by "2" in the seventh element. Further, it is assumed that the order of the elements of the first vector is determined in advance as explained above. However, if determined in advance, the number of items to be taken out and the position of the element in the first vector may be arbitrarily determined. In the above manner, the first vector generator 31 generates, for each player, the first vector indicating the position and the feature of the corresponding player, based on the positional data and the feature data.

Note that the element indicating whether the game venue is home is the data indicating the team to which the player belongs in the above example. Further, it is preferable that the data indicating the team to which the player belongs is included in the first vector as in the above example.

Note that the first vector of which player is set to what number first vector may be arbitrarily decided. For example, players are randomly selected one by one from among N players and the order of the selection may be set as the order of the first vectors.

Note that not only the position and feature at one time point but also the position and feature at each time point in a certain period may be included in the elements of the first vector. For example, it is conceivable that a longitudinal position coordinate X₁₁ and a lateral position coordinate Y₁₁ at a first time point, a longitudinal position coordinate X₁₂ and Y₁₂ at a second time point, and a longitudinal position coordinate X₁₃ and a lateral position coordinate Y₁₃ at a third time point of the first player are included in the first vector. It is further conceivable that values at a plurality of time points of whether the player receives a warning and the feature such as the weather, the temperature, and the direction of wind at the game venue which can vary during the game are included in the first vector. Note that both of the position and feature at each time point may be included, or one of them may be included.

Note that it is explained heretofore that the aspect is estimated in detail by adding the feature of each player to the first vector in addition to the position of each player, but the aspect can be estimated even without adding the feature of each player. For example, in the case of adding the feature of each player, it is necessary to individually identify each player by performing recognition of a face, a uniform number or the like in order to determine the position of each player from an image at a certain time point, but it may be difficult to identify all of the players depending on the condition such as the image, the photographic equipment or the like. Further, in the case of adding the feature of each player, a higher cost is required to identify each player. The aspect estimation system in this embodiment can estimate the aspect even without identifying the player located at each positional coordinate as long as the positions of all of the players at one time point are identified. Therefore, in the case of not adding the feature of each player to the first vector, it may not be necessary to specify the player located at each positional coordinate. In this case, it is possible to suppress the cost required for the system for grasping the position of the player such as the tracking system.

Note that the aspect estimation system of this embodiment can estimate the aspect based on the first vectors of all of the players at a plurality of time points, but does not need to acquire the correspondence among the first vectors (namely, the correspondence among the players) at each time point when the feature of each player is not added to the first vector. For example, the first vector P₁ of the first player is used in the above, but the first player at t time point and the first player at t+1 time point may be different. For example, the player located at the upper leftmost in a plan view of the pitch may be regarded as the first player. In this case, the player A is the first player at the t time point, but the player B can be the first player at the t+1 time point.

Further, in the case of adding the team to which the player belongs to the first vector, it may be only necessary to recognize to which team the player belongs. In this case, the team may be identified by identifying the color of the uniform of the player using, for example, the existing image recognition technique. In this case, the cost can be made lower than in the case of identifying each player.

The second vector generator 32 generates a vector of a dimension higher than that of the first vector by converting the first vector using a neural network. The vector generated by the second vector generator 32 is described as a second vector, and the neural network used in the second vector generator 32 is described as a vector generation model.

The vector generation model converts the feature included in the input data while increasing the dimension of the input data. Therefore, the vector generation model can be said a nonlinear feature conversion function. The vector generation model is assumed to be a multilayer perceptron (MLP), but is not limited to the multilayer perceptron. Note that one second vector is generated from one first vector. Therefore, when the number of players is N, N second vectors are generated. It is assumed here that an i-th second vector Qᵢ is generated from the first vector Pᵢ for the i-th player. Further, the second vector is assumed to be an L-dimensional vector having L (L is an integer of K or more) elements, and the second vector Qᵢ is expressed as Qᵢ = {qᵢ₁, qᵢ₂, ....., q_{iL}}. In other words, N K-dimensional point groups are independently input into an input layer of the vector generation model, whereby N L-dimensional point groups are obtained.

Here, the elements of the first vector are regarded to express the superposition of some meanings of the scene relating to the first vector. The conversion from the first vector to the second vector, namely, the increase of the dimension means the decomposition of the superposition, and each element of the second vector expresses more primitive meaning than does each element of the first vector. In other words, acquisition of more and different kinds of information can be expected by the increase of the dimension.

Note that the second vector generator 32 may use one vector generation model or may use a plurality of the same vector generation models. In other words, the second vector generator 32 may process the first vectors in order using one vector generation model or may process the first vectors in parallel using the plurality of the same vector generation models. In the above manner, the second vector generator 32 generates the second vector corresponding to each of the first vectors using the vector generation model based on the neural network.

Note that the neural network used in this embodiment has been already learned in an external part of the data processing device 3, and is assumed to be stored in advance in a not-illustrated storage unit or the like of the data processing device 3. The learning of the neural network will be explained in a later-explained embodiment.

The third vector generator 33 generates, from a plurality of second vectors generated by the second vector generator 32, a vector of the same dimension as that of the second vectors. The vector generated by the third vector generator 33 is described as a third vector. The third vector is of the same dimension as that of the second vector, and is thus expressed as F = {f₁, f₂,....., f_{L}}. Further, the third vector corresponds to the aforementioned aspect data.

The third vector generator 33 decides, for each basis of the second vector, a representative value from elements of the same basis of the second vectors, and sets the representative value as a value of the corresponding element of the third vector. For example, in the second vectors Q₁ to Q_{N}, elements of a j-th basis are q₁ⱼ, q₂ⱼ, ...., q_{Nj}. The third vector generator 33 decides the representative value based on the q₁ⱼ, q₂ⱼ, ...., q_{Nj}, and sets the decided representative value as an element fⱼ of the j-th basis of the third vector. In the above manner, the third vector generator 33 performs pooling on each of the elements for each basis of the second vector to generate the third vector.

The representative value may be a general value such as a maximum value, a minimum value, a central value, or an average value. Note that the representative value is preferably a value calculated without using the number of players. For example, for the calculation of the average value, the number of players is necessary, but the number of players varies depending on the presence or absence of leaving players. Therefore, the maximum value calculated without using the number of players is more preferable than the average value or the like calculated using the number of players.

Note that the aspect data in a certain period may be generated by integrating pieces of aspect data at a plurality of time points into one piece. Note that the integration method is not particularly limited. The pieces of aspect data may be merely arranged in order, or a common part of the pieces of aspect data may be omitted. A neural network for integrating the pieces of aspect data may be used.

Note that the entire contents of Charles R. Qi, and three others, "PointNet: Deep Learning on Point Sets for 3D Classification and Segmentation", April 10, 2017, arXiv: 1612.00593v2 [cs.CV] are incorporated herein by reference.

The estimator 34 performs estimation about the aspect based on the third vector, namely, the aspect data. For example, it is assumed that the estimation result is obtained using a neural network. The neural network is described as an estimation model. More specifically, the estimator 34 inputs the aspect data into the estimation model. In the estimation model, feature quantity conversion of the aspect data is repeatedly performed. Thus, the number of dimensions of the aspect data is reduced, and a vector decreased down to the number of dimensions representing the estimation result is finally output. In this manner, the estimator 34 inputs the third vector into the estimation model based on the neural network and thereby can obtain the estimation result for the aspect. For example, a neural network composed of a plurality of fully connected layers such as the multilayer perceptron can be used as the estimation model.

The estimation result may be expressed by a logical value representing whether it corresponds to an estimation item, or may be expressed by a score indicating the degree of matching with the estimation item. Further, the estimation result differs depending on the estimation model to be used. Further, it is assumed that there are a plurality of estimation items. Therefore, the estimator 34 has a plurality of estimation models having estimation items different from one another, and may select an appropriate estimation model from among the plurality of estimation models. In Fig. 1, estimation models 1 to 3 are illustrated, and it is assumed that one estimation model selected from among them is used. For example, an estimation model may be designated from the input/output device 4, and the estimator 34 may select the designated estimation model. Alternatively, an estimation item may be designated from the input/output device 4, and the estimator 34 may select an estimation model corresponding to the designated estimation item. In this manner, the estimator 34 may input the third vector into the designated estimation model or the estimation model corresponding to the designated estimation item, among the plurality of estimation models.

Further, a determination result for latest aspect data or each piece of aspect data can also be obtained by inputting a plurality of pieces of aspect data in order into the estimation model based on a recurrent neural network.

Note that the estimation may be performed without using the estimation model. For example, it is conceivable to compare two pieces of aspect data to estimate whether two aspects are similar. A method of determining similarity may be arbitrarily decided. For example, elements of two pieces of aspect data, namely, {f₁, f₂,....., f_{L}} are compared, and the estimation may be performed based on the comparison. For example, it is conceivable that when the total sum of differences between the elements exceeds a certain value, the two aspects are estimated to be dissimilar.

The input/output device is a device for outputting the estimation result of the data processing device 3. The output method is not particularly limited. For example, the estimation result may be output as an image on a screen or the like or may be output in a data form such as a file, mail or the like.

Further, it is assumed that the instruction from a user to the data processing device 3 is input to the data processing device 3 via the input/output device 4. It is conceivable, for example, that the estimation model or the estimation item is designated. Alternatively, it is conceivable to accept an instruction of making the first vector include the positions at a plurality of time points.

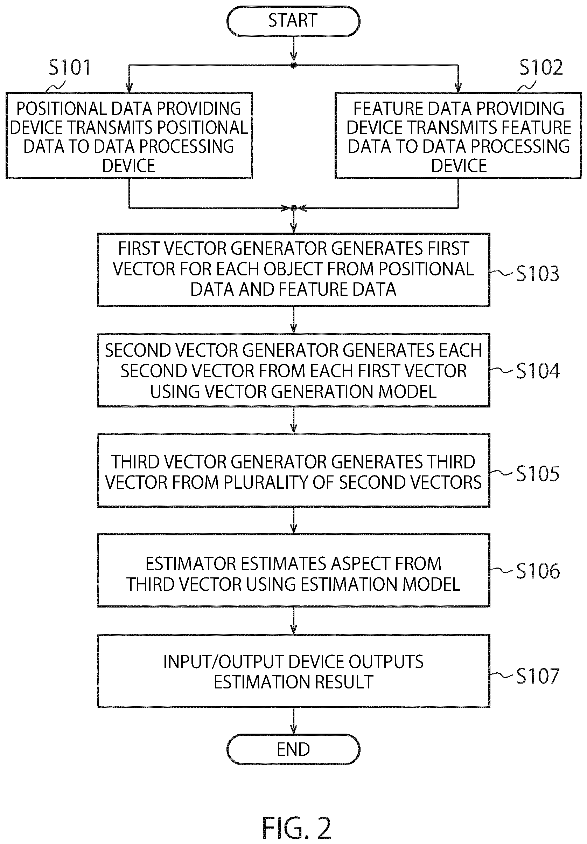

Next, the flow of the processing in this embodiment will be explained. Fig. 2 is a schematic flowchart of the whole processing of the aspect estimation system according to the first embodiment.

The positional data providing device 1 transmits the position coordinate of each player at each time point of the game as the positional data at each time point to the data processing device 3 (S101). On the other hand, the feature data providing device 2 transmits the feature data at each time point to the data processing device 3 (S102). Note that when the contents of the feature data do not vary during the game, the feature data providing device 2 may only need to transmit one piece of feature data as the feature data at all time points.

The first vector generator 31 generates the first vector for each player from the positional data and the feature data (S103). It is assumed that which information is stored in each basis of the first vector is decided in advance. The second vector generator 32 generates each second vector from each first vector using the vector generation model (S104). The first vectors are input into the input layer of the vector generation model and subjected to an arithmetic operation in each intermediate layer of the vector generation model, and the second vectors are output from the output layer of the vector generation model.

The third vector generator 33 performs pooling to generate the third vector from the plurality of second vectors (S105). The estimator 34 estimates the aspect from the third vector using the estimation model (S106). The estimation result is sent to the input/output device 4 and output by a predetermined method (S107). In this manner, it becomes possible to recognize, based at least on the position of the player at a certain time point, the aspect at the time point.

Note that the flowchart in this explanation is an example, and the flowchart is not limited to the above example. Rearrangement, addition and omission of the procedure may be made according to the required specification or the change in the embodiment. For example, instead of outputting the estimation result, the data processing device 3 may perform new processing using the estimation result. In this case, the processing at S107 is omitted.

As explained above, according to this embodiment, a plurality of first vectors representing the position and feature of the player are generated. The plurality of first vectors are regarded as the point groups in which the features of the aspect are integrated, the aspect data indicating the features of the aspect is generated from the point groups, and estimation about the aspect is performed using the aspect data. Thus, the aspect, namely, what situation the game is in can be recognized.

Further, this embodiment has an advantage as compared with the existing device which performs estimation using the neural network, from the viewpoint of the processing load. For example, this embodiment may only need to simply input the first vector into the vector generation model, and is superior to a device which needs to perform complicated processing in advance for input into the neural network. Further, the amount of data input into each neural network is smaller than that in a device which uses image or information on the whole pitch, so that the consumption of memory and the time required for output can be suppressed.

Further, the aspect data is obtained by pooling the second vector generated for each player, thus preventing such a situation that the estimation result differs depending on which first vector relates to which player. Therefore, a stable estimation result can be obtained.

Further, by not using the number of players but using the representative value in the pooling, the load of taking the variation in number of players into account can be reduced even for a sport in which the number of players varies due to leaving.

### (Second Embodiment)

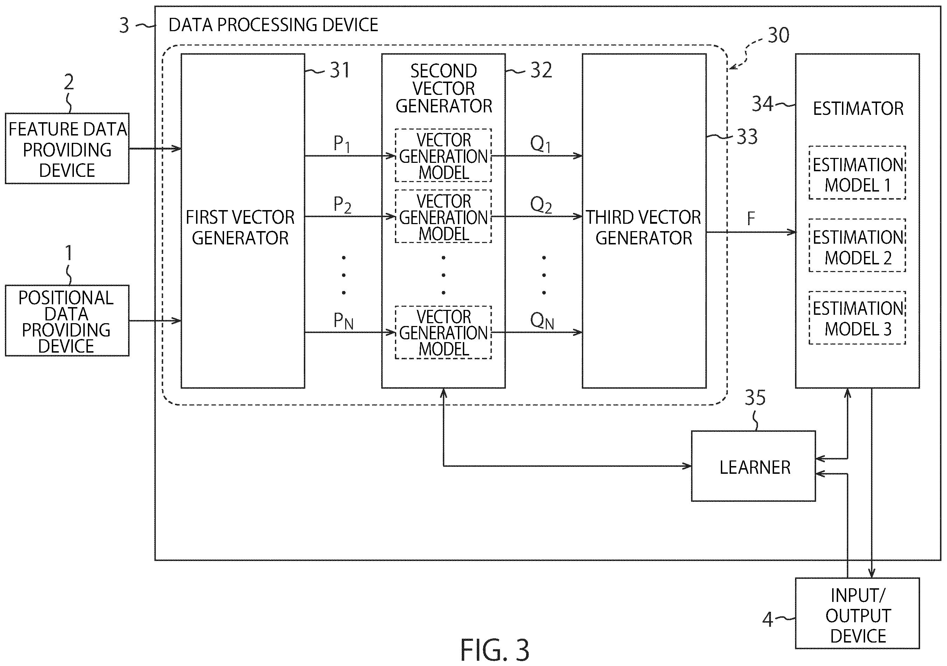

In a second embodiment, learning is performed on the vector generation model and the estimation model used in the first embodiment. Fig. 3 is a block diagram illustrating an aspect estimation system according to the second embodiment. The second embodiment is different from the first embodiment in that the data processing device 3 further includes a learner 35.

The processing until the estimation result is output to the input/output device 4 is the same as that in the first embodiment. The explanation of the same point as that in the first embodiment will be omitted.

The data processing device 3 in the second embodiment outputs the estimation result to the input/output device 4, and then receives the evaluation for the estimation result from the input/output device 4. The learner 35 performs learning of the estimation model and the vector generation model based on the evaluation. For example, the learner 35 updates a weighting coefficient (parameter) of the arithmetic operation in each intermediate layer of the model of a learning object by the error back propagation method using a loss function using, as parameters, an output value of the model of a learning object (namely, an output value of the estimation model or the vector generation model) and a value relating to the evaluation. The loss function may be publicly known one such as a cross entropy loss. The update is repeated, the learning advances, and the parameters shift to appropriate values.

For example, it is assumed that for the result of the data processing device 3 estimating which team is in the lead, a human or another device replies a correct answer or an incorrect answer to the data processing device 3 via the input/output device 4. Further, when the score indicating the degree of the lead is output from the data processing device 3 via the input/output device 4, the score as the correct answer may be replied to the data processing device 3 via the input/output device 4. Note that, as explained above, when estimating whether the facility is in a dangerous situation, whether it is in a dangerous situation and the score indicating how much it is dangerous may only need to be replied.

Note that since the number of dimensions of the vector to be input into the vector generation model and the determination model is limited as explained above, the number of parameters to be updated by the learning can be suppressed. This requires less time and amount for the learning.

Further, the learning may be performed using not actual data but data for learning generated for the learning. Not only the positional data, the feature data, and the evaluation, but also data for learning for the first to third vectors may be used. Further, the data for learning may be acquired from an external device other than the providing devices 1 and 2 and the input/output device 4. Note that the actual data includes frequently appearing elements and hardly appearing elements. When the learning is advanced using imbalanced data with a large bias in appearance, the versatility of the learned model is degraded. Therefore, the versatility of the model may be secured by performing learning using the data for learning without bias in appearance.

Note that in the case where a plurality of estimation models are used, it is necessary to make the learner 35 capable of recognizing which of the estimation models the learner 35 needs to update. For example, it is conceivable that the estimator 34 transmits an identifier for identifying the estimation item or the estimation model together with the estimation result when transmitting the estimation result to the input/output device 4, and the input/output device 4 transmits also the identifier when transmitting the evaluation for the estimation result.

Note that it is conceivable to perform learning of the vector generation model using a technique of autoencoder. More specifically, it is conceivable to restore the third vector to the first vector or the second vector using a neural network (restoration model) and perform learning of the vector generation model and the restoration model based on the original first or second vector used for the generation of the third vector and on the restored first or second vector. Further, it is also conceivable to perform adversarial learning of identifying whether the given vector is the original vector or the restored vector.

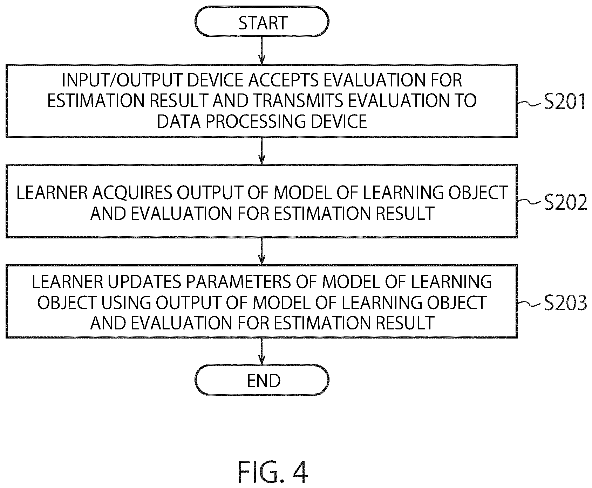

Next, the flow of the learning processing of the model generation will be explained. Fig. 4 is a schematic flowchart of the learning processing for the estimation model.

The input/output device 4 accepts the evaluation for the estimation result and transmits the evaluation to the data processing device 3 (S201). The learner 35 acquires the evaluation transmitted from the input/output device 4 and the output value of the model of the learning object (S202). Note that the output value of the model of the learning object may be acquired when it is output from the model of the learning object (S104 and S106 in the flow of Fig. 2). Alternatively, the output values of the vector generation model and the estimation model may be stored in the not-illustrated storage unit, and the learner 35 may extract, when learning, the output value of the model of the learning object from the storage unit. The learner 35 updates the parameters of the model of the learning object using thus acquired output of the model of the learning object and the evaluation for the estimation result (S203). In the above manner, the learning for the estimation model advances.

Note that an end condition of the learning may be appropriately decided based on the value of the loss function, the number of times of learning or the like. It is adoptable that when the end condition of the learning is satisfied, the learning does not have to be performed even if the evaluation is accepted.

As in the above, according to this embodiment, the learning of the vector generation model and the estimation model used for aspect estimation can be performed. Note that though the case where learning of both of the estimation model and the vector generation model is performed is explained in the above, there may be a case where only one of them is learned and the other is acquired from the external device.

Note that at least part of the above embodiment may be implemented by a dedicated electronic circuit (namely, hardware) such as an IC (Integrated Circuit) equipped with a processor, a memory and so on. Further, at least part of the above embodiment may be implemented by executing software (program). The processing in the above embodiment can be implemented by using, for example, a general-purpose computer device as basic hardware and causing a processor (processing circuitry) such as a central processing unit (CPU) or a graphical processing unit (GPU) mounted on the computer device to execute the program. In other words, one or a plurality of processors (processing circuitry) are configured to be able to execute the processing of the data processing device 3 by the execution of the program.

For example, the computer reads dedicated software stored in a computer-readable storage medium, and thereby can be made into the device in the above embodiment. The kind of the storage medium is not particularly limited. Further, the computer installs dedicated software downloaded over the communication network and thereby can be made into the device in the above embodiment. In this manner, the information processing by the software is concretely implemented using hardware resources.

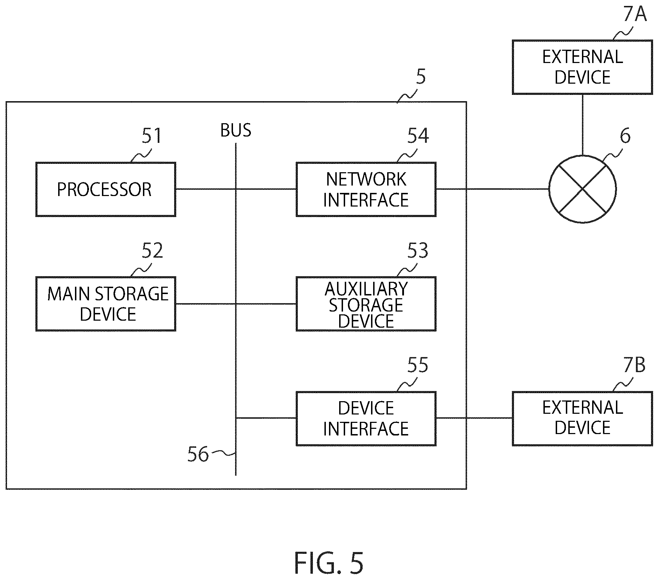

Fig. 5 is a block diagram illustrating an example of a hardware configuration in one embodiment of the present invention. The data processing device 3 includes a processor 51, a main storage device 52, an auxiliary storage device 53, a network interface 54, and a device interface 55, and can be realized as a computer device 5 in which they are connected via a bus 56.

Note that the computer device 5 in Fig. 5 includes the components one each, but may include a plurality of the same components. Further, in Fig. 5, one computer device 5 is illustrated, but software may be installed in a plurality of computer devices and the plurality of computer devices may execute different parts of processing of the software, respectively.

The processor 51 is an electronic circuit (processing circuitry) including a control device and an arithmetic unit of the computer. The processor 51 performs arithmetic processing based on data and program input from each device of the internal configuration of the computer device 5, and outputs an arithmetic operation result and a control signal to each device. More specifically, the processor 51 executes an OS (operating system), an application and the like of the computer device 5 and thereby controls the components constituting the computer device 5. The processor 51 is not particularly limited as long as the processor 51 can perform the above processing. The components such as the first vector generator 31, the second vector generator 32, the third vector generator 33, the estimator 34, and the learner 35 which perform processing of the data processing device 3 are implemented by the processor 51. For example, the processor 51 inputs the input data into the neural network to obtain an output, using the neural network such as the vector generation model stored in the main storage device 52 or the auxiliary storage device 53 as a program module being a part of the software.

The main storage device 52 is a storage device which stores commands executed by the processor 51 and various kinds of data, and the information stored in the main storage device 52 is directly read by the processor 51. The auxiliary storage device 53 is a storage device other than the main storage device 52. Note that these storage devices mean arbitrary electronic components which can store electronic information, and may be memories or storages. Further, examples of the memory include a volatile memory and a nonvolatile memory any of which may be employable. The storage unit of each device belonging to the aspect estimation system can be implemented by the main storage device 52 or the auxiliary storage device 53.

The network interface 54 is an interface for connecting to a communication network 6 by wire or by wireless. For the network interface 54, the one in conformity to the existing communication protocol may only need to be used. By the network interface 54, the computer device 5 and an external device 7A can be connected over the communication network 6.

The device interface 55 is an interface such as a USB directly connecting with an external device 7B. In other words, the connection between the computer device 5 and the external device 7 may be made directly or over the network.

The external devices 7 (7a and 7B) may be devices other than the data processing device 3, external storage media, or storage devices. For example, the positional data providing device 1, the feature data providing device 2, and the input/output device 4 can be regarded as the external devices 7.

Note that the external device 7 may be an input device. The input device includes a device such as a keyboard, a mouse, a touch panel and the like, and provides information input through these devices, to the computer device 5. A signal from the input device is output to the processor 51.

While certain embodiments of the present invention have been described above, these embodiments have been presented by way of example only, and are not intended to limit the scope of the inventions. These novel embodiments may be embodied in a variety of other forms, and various omissions, substitutions and changes may be made without departing from the spirit of the inventions. These embodiments and their modifications would fall within the scope and spirit of the inventions and be covered by the inventions set forth in the claims and their equivalents

### REFERENCE SINGS LIST

1: positional data providing device, 2: feature data providing device, 3: data processing device, 30: aspect data generator, 31: first vector generator, 32: second vector generator, 33: third vector generator, 34: estimator, 35: learner, 4: input/output device, 5: computer device, 51: processor, 52: main storage device, 53: auxiliary storage device, 54: network interface, 55: device interface, 56: bus, 6: communication network, 7 (7A, 7B): external device

## Claims

1. A data processing device comprising:
one or more memories; and
one or more processors;
**characterized in that** the one or more processors are configured to:
generate aspect data based on first vectors, the first vectors being based on positional data indicating positions of a plurality of objects and feature data indicating respective features of the plurality of objects; and
perform estimation about an aspect based on the aspect data.

2. The data processing device according to claim 1, wherein
the one or more processors are, to generate the aspect data, further configured to:
generate the first vector for each of the objects based on the positional data and the feature data;
generate a second vector corresponding to each of the first vectors by converting the first vector using a vector generation model based on a neural network; and
generate a third vector based on the second vectors, wherein
the third vector is the aspect data.

3. The data processing device according to claim 2, wherein the second vector is higher in dimension than the first vector.

4. The data processing device according to claim 2 or 3, wherein
the one or more processors decide, for each basis of the second vector, a representative value from elements of the same basis of the second vectors, and sets the representative value as a value of a corresponding basis of the third vector.

5. The data processing device according to claim 4, wherein
the representative value is calculated without using the number of objects.

6. The data processing device according to any one of claims 1 to 5, wherein
the feature data includes information about an organization to which each of the objects belongs.

7. The data processing device according to any one of claims 1 to 6, wherein
the one or more processors input the aspect data into an estimation model based on a neural network to acquire an estimation result about the aspect.

8. The data processing device according to claim 7, wherein
the one or more processors input the aspect data into a designated estimation model or an estimation model corresponding to a designated estimation item, among a plurality of estimation models having different estimation items.

9. The data processing device according to claim 2 or according to any one of claims 3 to 8 directly or indirectly subordinate to claim 2, wherein the one or more processors further configured to:
update parameters of the vector generation model at least based on an evaluation of the estimation result.

10. The data processing device according to claim 7 or 8,wherein the one or more processors further configured to:
update parameters of the estimation model at least based on an evaluation of the estimation result.

11. The data processing device according to any one of claims 1 to 10, wherein
the aspect is an aspect in a sport.

12. The data processing device according to claim 11, wherein the object is a player in the sport.

13. A data generation method comprising:
generating, by one or more processors, aspect data based on first vectors, the first vectors being based on positional data indicating positions of a plurality of objects and feature data indicating respective features of the plurality of objects; and
performing, by the one or more processors, estimation about an aspect based on the aspect data.

14. A non-transitory computer readable medium stored therein a program which executes a method, when executed by one or more processors, the method comprising:
generating aspect data based on first vectors, the first vectors being based on positional data indicating positions of a plurality of objects and feature data indicating respective features of the plurality of objects; and
performing estimation about an aspect based on the aspect data.
